(19) Europäisches Patentamt
European Patent Office
Office européen des brevets

(11) **EP 4 318 024 A1**

(12) **EUROPEAN PATENT APPLICATION**
published in accordance with Art. 153(4) EPC

(43) Date of publication:
**07.02.2024 Bulletin 2024/06**

(21) Application number: **21937767.8**

(22) Date of filing: **31.12.2021**

(51) International Patent Classification (IPC):
**G01S 7/481** (2006.01)      **G01D 5/20** (2006.01)

(52) Cooperative Patent Classification (CPC):
**G01B 11/26; G01D 5/20; G01S 7/481; G01S 7/497**

(86) International application number:
**PCT/CN2021/143790**

(87) International publication number:
**WO 2022/222546 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2021 CN 202110442203**

(71) Applicant: **Hesai Technology Co., Ltd.**
**Shanghai 201821 (CN)**

(72) Inventors:
• **GAO, Yongfeng**
**Shanghai 201821 (CN)**
• **XIANG, Shaoqing**
**Shanghai 201821 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **ANGLE MEASURING DEVICE AND ANGLE MEASURING METHOD FOR SCANNING DEVICE OF LASER RADAR**

(57)     A device and method for measuring an angle of a scanner, and a LiDAR. The device for measuring the angle includes a conductor (11) and an angle measuring circuit (12), wherein the scanner comprises a scanning mirror (10); one side of the scanning mirror (10) includes a reflective surface and the other side thereof includes a mounting surface, and the scanning mirror can pivot around at least one axis; the conductor (11) can be fixed on the mounting surface; the angle measuring circuit (12) includes a resonant system (120) and a sampling unit (121); the resonant system (120) includes an inductor (1201) and a capacitor (1202), the inductor (1201) can be fixedly arranged at a predetermined distance from a stationary position of the conductor (11); and the sampling unit (121) can sample and output an electric signal of the resonant system (120), and can determine a parameter of the resonant system (120) so as to determine a tilt angle of the scanning mirror (10). The aim of measuring the tilt angle of the scanning mirror can be achieved.

Fig. 1

EP 4 318 024 A1

**Description**

CROSS REFERENCE TO RELATED APPLICATION

This application claims priority to Chinese Patent Application No. 202110442203.6 entitled "ANGLE MEASUREMENT DEVICE AND ANGLE MEASUREMENT METHOD FOR SCANNING DEVICE OF LIDAR", filed on April 23, 2021, which is hereby incorporated by reference in its entirety.

TECHNICAL FIELD

This application relates to the field of laser detection, and, in particular, to a device for measuring an angle and a method for measuring an angle of a scanner of a LiDAR, and a LiDAR.

BACKGROUND

A LiDARcan use a scanner to achieve scanning at different angles. The transmitter of the LiDAR deflects an emitted detection beam to different angles by the scanner whose angle changes with time, so as to achieve scanning detection at different angles. An echo signal of the detection beam reflected by an object canreturn to the LiDAR, and can be received and converted into an electrical signal by a photodetector in a receiver. After signal processing of the electrical signal, information such as a distance from the object is obtained or three-dimensional imaging is achieved. A commonly used scanner may include a scanning mirror.

A scanning mirror-based LiDAR require to measure atilt or oscilation angle of the scanning mirror during operation in order to determine spatial angular positions of respective detection beams when receiving the object. The spatial angular positions combined with the distance from the object calculated based on a time of flight can determine a three-dimensional spatial position of the object.

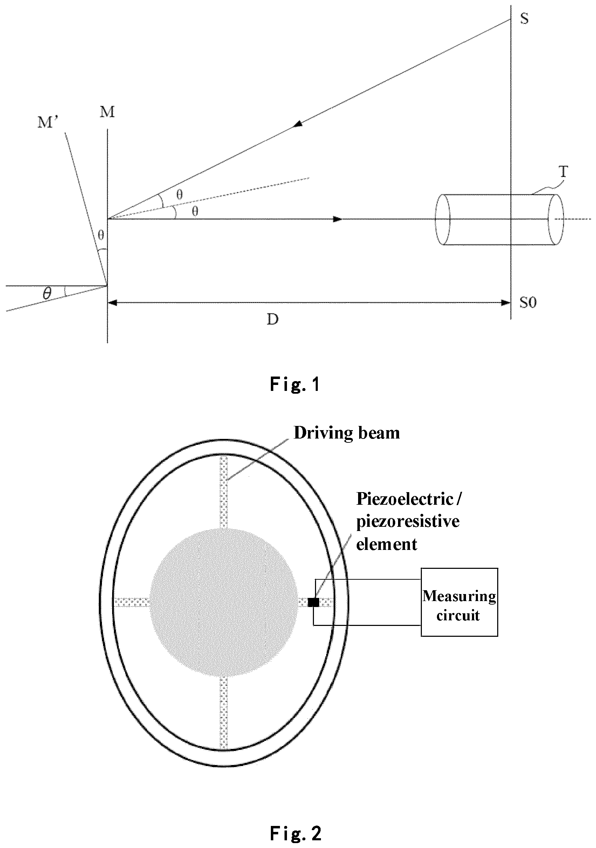

Existing methods for measuring an angle of a scanning mirror include optical lever measurement and piezoelectric/piezoresistive measurement. The principle of optical lever measurement is shown in FIG. 1. A normal direction of an initial position of a mirror surface M is set as horizontal, and the scale S0 can be seen by a telescope T. When the mirror surface rotates by an angle θ to the position M', the normal of the mirror (a line that passes through the geometric center of the mirror surface and whose direction is perpendicular to the mirror surface) rotates by the angle θ, and the scale S can be observed by the telescope. According to the principle of light reflection:

$$tan2\theta = \frac{S-S_0}{D}$$

, the angle θ that the mirror surface rotates by can be calculated. The sensitivity and signal-to-noise ratio of the optical lever measurement method are proportional to the length D of the optical lever. Thus, there will be a balanced relationship between the device size and the signal-to-noise ratio of angle measurement, and it is impossible to improve the signal-to-noise ratio while reducing the device volume, which does not meet the development trend of miniaturation of devices.

FIG. 2 shows a schematic diagram illustrating the method for measuring the angle based on the piezoelectric/piezoresistive principle. The piezoelectric/piezoresistive measurement method is integrated a piezoelectric or piezoresistive element on the deformation structure of the scanning mirror (the driving beam shown in FIG. 2). As shown in FIG. 2, when the driving beam drives the scanning mirror to pivot, the driving beam itself undergoes deformation such as stretching, compression or torsion, resulting in a pressure change on the piezoelectric/piezoresistive element, which causes a change in voltage/resistance of the element. The changes in voltage/resistance can be measured and converted into angular changes. However, this measurement method can only obtain the amount of the angular change, and cannot measure the absolute angle of the scanning mirror. When factors such as thermal deformation cause deformation or translational movement of the scanning mirror (the movement of the mirror surface along the normal direction) , this method will produce an error in the angle measurement.

SUMMARY

The application provides a device for measuring an angle and a method for measuring an angle of a scanner of a LiDAR.

In a first aspect, this application provides a device for measuring an angle of a scanner of a LiDAR, including: a conductor and an angle measurement circuit; wherein the scanner comprises a scanning mirror, at least one side of the scanning mirror comprises a reflective surface, and the scanning mirror is configured to pivot around at least one axis to change a direction of an emitted beam from the LiDAR or a reflected beam, the conductor is configured to be fixed on the scanning mirror, the angle measurement circuit comprises a resonant system and a sampling unit, the conductor is configured to affect a resonance characteristic of the resonant system, and the sampling unit is configured to sample an electrical signal of the resonant system and output the sampled electrical signalto determine a parameter of the resonant system to determine a tilt angle of the scanning mirror.

In a second aspect, the embodiment of this application provides a LiDAR, comprises: a transmitter configured to emit a detection beam; a scanner comprising a scanning mirror configured to deflect the detection beam to a target space and reflect an echo beam of the detection beam reflected by an object, and the scanning mirror is configured to pivot around at least one axis; a receiver configured to receive the echo beam and convert the echo beam into an electrical signal; and the device for measuring the angle of the scanner according to the first aspect configured to determine the tilt angle of the scanning mirror.

In a third aspect, the embodiment of this application provides a method for measuring an angle, to measure a tilt angle of a scanner of a LiDAR using the device for measuring the angle described in the first aspect, wherein the scanner comprises a scanning mirror, the conductor is configured to be fixed on the scanning mirror, the angle measurement circuit comprises a resonant system, and the method comprising: acquiring a parameter of the resonant system; and determining a tilt angle of the scanning mirror based on the parameter.

In accordance with the device for measuring the angle and the method for measuring the angle of the scanner of the LiDAR provided in the embodiment of this application, the conductor is disposed on the scanner, and the angle measurement circuit is provided. The angle measurement circuit includes a resonant system, a parameter of the above-mentioned resonant system during resonance can be measured to determine the tilt angle of the scanning mirror based on the parameter. There is no need to arrange any component requiring power supply on the scanning mirror in the device for measuring the angle of the scanner. Therefore, there is no need to increase power supply and heat dissipation for the scanning mirror, and therefore, the above-mentioned device for measuring the angle does not affect the reliability of the scanner. In addition, the above-mentioned device for measuring the angle has a simple and compact structure, which can reduce the cost of measuring the tilt angle of the scanner.

On this basis, by setting a reference angle measurement circuit and an edge angle measurement circuit, or setting multiple edge angle measurement circuits, the measurement deviation caused by the change of the absolute angle of the scanning mirror due to factors such as thermal deformation and translational movement can be eliminated, and the accuracy and reliability of the angle measurement of the scanning mirror can be significantly improved.

BRIEF DESCRIPTION OF THE DRAWINGS

Other features, objectives and advantages of this application will become more apparent by reading the detailed description of non-limiting embodiments that is provided with reference to the following drawings:

FIG. 1 shows a schematic diagram illustrating a principle of measuring an of a scanner of a LiDAR in a related art;
FIG. 2 shows a schematic diagram illustrating a principle of measuring an of a scanner of a LiDAR in another related art;
FIG. 3A shows a schematic structural diagram illustrating some embodiments of a device for measuring an angle for a scanner of a LiDAR according to an embodiment of this application;
FIG. 3B shows a schematic top view of a scanning mirror and an inductor in the embodiment shown in FIG. 3A;
FIG. 4 shows a schematic diagram illustrating an equivalent circuit of the device for measuring the angle shown in FIG. 3A;
FIG. 5 shows a schematic structural diagram illustrating a sampling unit sampling a parameter of a resonant system according to some embodiments;
FIG. 6 shows a schematic structural diagram illustrating a sampling unit sampling a parameter of a resonant system according to some other embodiments;
FIG. 7 shows a schematic principle diagram of measuring a tilt angle of a scanning mirror, applied to the device for measuring the angle for the scanner of the LiDAR in the embodiment shown in FIG. 3A;
FIG. 8A shows a schematic structural diagram illustrating some other embodiments of a device for measuring an angle for a scanner of a LiDAR according to an embodiment of this application;
FIG. 8B shows a schematic top view of a scanning mirror and an inductor in the embodiments shown in FIG. 8A;
FIG. 9A shows a schematic structural diagram illustrating some further embodiments of a device for measuring an angle for a scanner of a LiDAR according to an embodiment of this application;
FIG. 9B shows a schematic top view of a scanning mirror and an inductor in the embodiment shown in FIG. 9A;
FIG. 10 shows a schematic top view of another scanning mirror and an inductor of a scanner according to an embodiment of this application;
FIG. 11 shows a schematic top view of yet another scanning mirror and an inductor of a scanner according to an embodiment of this application; and
FIG. 12 shows a schematic flowchart of an angle measurement method according to an embodiment of this application.

DETAILED DESCRIPTION

The application is further described in detail below with reference to the accompanying drawings and embodiments. It is to be understood that specific embodiments described herein are merely used to the explanation of the relevant disclosure, not to limit the disclosure. It also is to be further noted that, for ease of description, only parts related to the relevant disclosure are shown in accompanying drawings.

It is to be noted that the embodiments in this application and the features in the embodiments can be combined with each other in the case of no conflict. The following describes this application in detail with reference to the accompanying drawings and the embodiments.

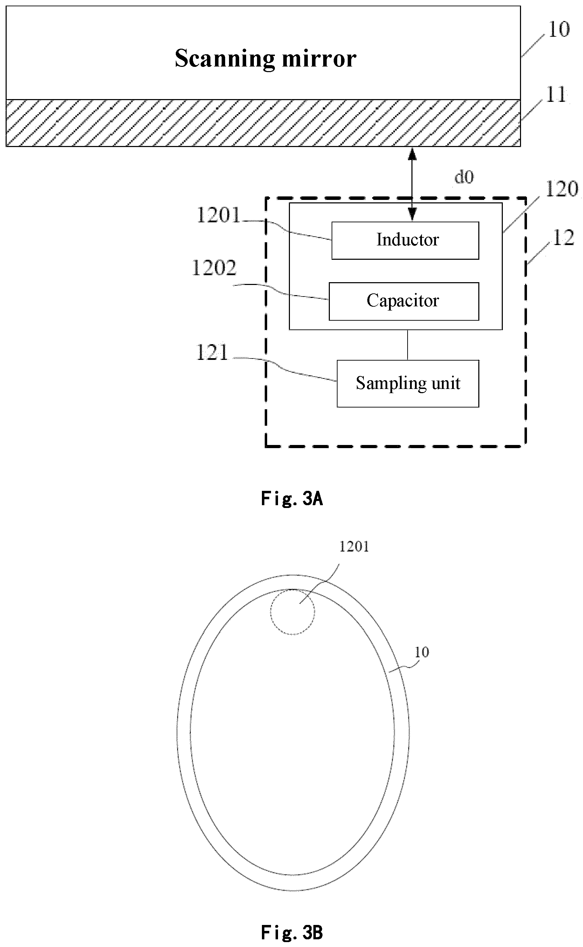

Refer to FIG. 3A and FIG. 3B, FIG. 3A shows a schematic structural diagram illustrating some embodiments of a device for measuring an angle of a scanner of the LiDAR according to this application, and FIG. 3B shows a schematic top view of the scanning mirror and the inductor shown in FIG. 3A.

The scanner described above may include a scanning mirror 10. At least one side of the scanning mirror 10 includes a reflective surface. The scanning mirror 10 may include one or more axes. The scanning mirror 10 can pivot around at least one axis to change the direction of an emitted beam from the LiDAR or the reflected light beam.

A side view of the scanning mirror is shown in FIG. 3A.

The device for measuring the angle of the scanner described above includes a conductor 11 and an angle measurement circuit 12. The conductor 11 can be fixed on the scanning mirror 10. Optionally, the above-mentioned conductor 11 can be fixed on a surface of the scanning mirror 10 opposite to the reflective surface. The above-mentioned conductor 11 may have good electrical conductivity. For example, the conductor 11 can be made of a metal material with high electrical conductivity (such as aluminum, copper, or an alloy thereof, etc.).

The angle measurement circuit 12 includes a resonant system 120 and a sampling unit 121. The above-mentioned resonant system can operate in a resonant state when the scanning mirror rotates. The conductor 11 can affect the resonance characteristic of the resonant system. The sampling unit 121 can sample the electrical signal of the resonant system 120 and output the electrical signal to determining the parameter of the resonant system 120 to determine the tilt angle of the scanning mirror 10. The above-mentioned parameter may include an equivalent inductance, resonant frequency, resonant period, etc.

When measuring the tilt angle of the scanning mirror 10, the device for measuring the angle of the scanner of the LiDAR can use the parameter to determine the tilt distance of the edge of the scanning mirror, and then use the tilt distance to determine the tilt angle.

In some application scenarios, the parameter includes a resonant frequency or a resonant period of the resonant system, and the device for measuring the angle uses the resonant frequency or resonant period to determine the tilt angle of the scanning mirror.

In some other application scenarios, the parameter includes an equivalent inductance of the resonant system, and the device for measuring the angle uses the equivalent inductance to determine the tilt angle of the scanning mirror.

In this embodiment, the conductor can be disposed on the scanner, and an angle measurement circuit is provided. The angle measurement circuit includes a resonant system. A parameter of the above-mentioned resonant system during resonance can be measured to determine the equivalent inductance of the inductor and the above-mentioned conductor, and then the tilt angle of the scanning mirror can be determined based on the equivalent inductance. There is no need to arrange any component requiring power supply on the scanning mirror in the above-mentioned device for measuring the angle of the scanner. Therefore, there is no need for power supply and heat dissipation for the scanning mirror, and therefore, the above-mentioned device for measuring the angle does not affect the reliability of the scanner. In addition, the above-mentioned device for measuring the angle has a simple and compact structure, which can reduce the cost of measuring the tilt angle of the scanner.

Optionally, as shown in FIG. 3A, the resonant system 120 includes an inductor 1201 and a capacitor 1202. The inductor 1201 can be fixedly arranged at a predetermined distance d0 from a static position of the conductor 11.

Generally, the predetermined distance between the inductor 1201 and the conductor 11 may be greater than the maximum amplitude of the scanning mirror 10. However, when the predetermined distance is too large, the measurement sensitivity will be reduced. The predetermined distance can be set slightly larger than the maximum amplitude of the scanning mirror 10. The scanning mirror 10 can pivot around an axis during operation. The maximum amplitude of the scanning mirror 10 can refer to the distance by which an edge of the scanning mirror 10 deviates from its initial position in the normal direction of the scanning mirror 10 (that is, the normal direction of the plane where the coil is located) in the initial position when the scanning mirror 10 is at its maximum tilt amplitude.

The above-mentioned parameter may be the equivalent inductance of the resonant system 120, which represents the mutual inductance between the conductor 11 and the inductor 1201, and is related to the distance between the inductor 1201 and the conductor 11.

The projection of the geometric center of the inductor 1201 on the scanning mirror 10 can be offset from the geometric center of the scanning mirror 10. In some application scenarios, the angle measurement circuit 12 may be an edge angle measurement circuit. The projection of the inductor 1201 of the edge angle measurement circuit 12 on the scanning mirror 10 can locate at the edge of the scanning mirror 10.

Here, the inductor 1201 may include but not limited to a coil. The above-mentioned coil may face the above-mentioned conductor 11, and the plane where the coil is located can be parallel to the plane where the conductor 11 is located in a static state.

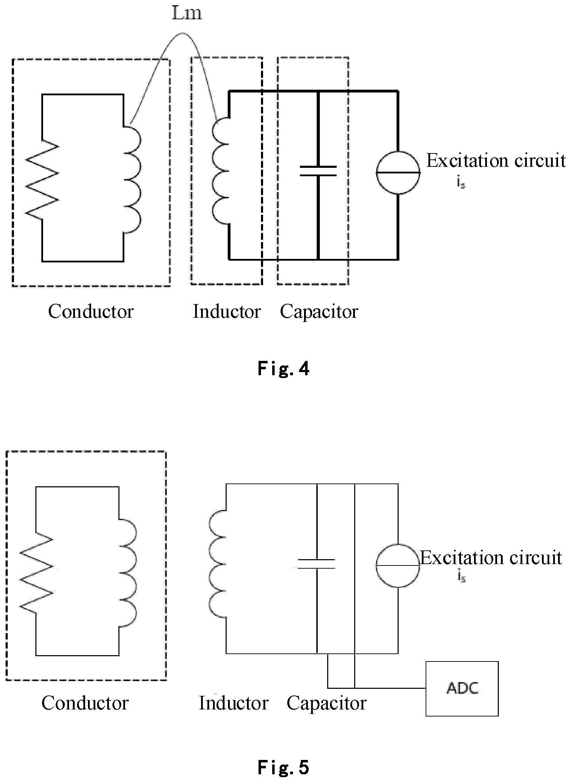

FIG. 4 shows a schematic diagram illustrating an equivalent circuit of the device for measuring the angle shown in FIG. 3A.

As shown in FIG. 4, the above-mentioned conductor can be equivalent to an inductor-resistance model. The above-mentioned angle measurement circuit 12 also includes an excitation source (that is, the excitation circuit in the figure) $i_s$. The excitation source $i_s$ can make the

above-mentioned resonant system operate in a resonant state.

Since the inductor 1201 faces the above conductor, a mutual inductance ($L_m$) will be generated between the inductor 1201 and the conductor 11. The mutual inductance $L_m$ is modulated by the distance between the inductor and the conductor, that is, the mutual inductance ($L_m$) changes with the variation in distance between the inductor 1201 and the conductor 11.

The inductor 1201 may be connected in parallel or in series with the capacitor 1202 to form a resonant circuit. As shown in FIG. 4, a resonant circuit can be formed by the parallel connection of an inductor and a capacitor, and the excitation source $i_s$ can make the above-mentioned resonant circuit operate at the resonance point. When the resonant circuit operates at the resonance point, the resonant frequency satisfies:

$$ \qquad (1) \; ; $$

The above-mentioned $L_e$ is the above-mentioned equivalent inductance, and the above-mentioned C is the capacitance value of the capacitor.

In addition, when the scanning mirror 10 pivot around the axis, the conductor 11 arranged on the mounting surface of the scanning mirror 10 can pivot with the scanning mirror, and the distance between the conductor 11 and the inductor 1201 will change. As the distance between the above-mentioned conductor 11 and the inductor 1201 changes, the mutual inductance $L_m$ between the conductor 11 and the inductor 1201 will change, thereby causing the variation of the equivalent inductance $L_e$ of the resonant circuit. By adjusting the excitation signal of the excitation source $i_s$, the resonant system can always operate in the resonant state. According to the formula (1), the equivalent inductance $L_e$ of the resonant system can be obtained by measuring the frequency of the resonant system, and further, the distance between the conductor and the inductor can be determined based on the equivalent inductance during resonance. Furthermore, the tilt angle of the scanning mirror 10 can be determined based on the distance between the conductor 11 and the inductor 1201.

The sampling unit 121 can be used to sample the electrical signal of the resonant system 120, and output the sampled signal. The resonant frequency or resonant period of the resonant system 120 can be determined based on the sampled signal output by the sampling unit 121, and the equivalent inductance can be further determined based on the resonant frequency or resonant period. Then an actual distance between the conductor 11 and the inductor 1201 can be determined, and the tilt angle of the scanning mirror 10 can be determined based on the actual distance and initial distance.

As an optional implementation, the sampling unit 121 includes an analog-to-digital converter. An input of the analog-to-digital converter is connected to the above-mentioned resonant system, so as to sample the electric signal of the resonant system. As shown in FIG. 5, two ends of the parallel-connected inductor and the capacitor are respectively connected to the input of the analog-to-digital converter. The analog-to-digital converter can be used to collecte an oscillating sine wave of the resonant system , and a time corresponding to one oscillation, that is, an oscillation period, can be obtained based on the sine wave analog signal. The resonant frequency can be determined based on the oscillation period.

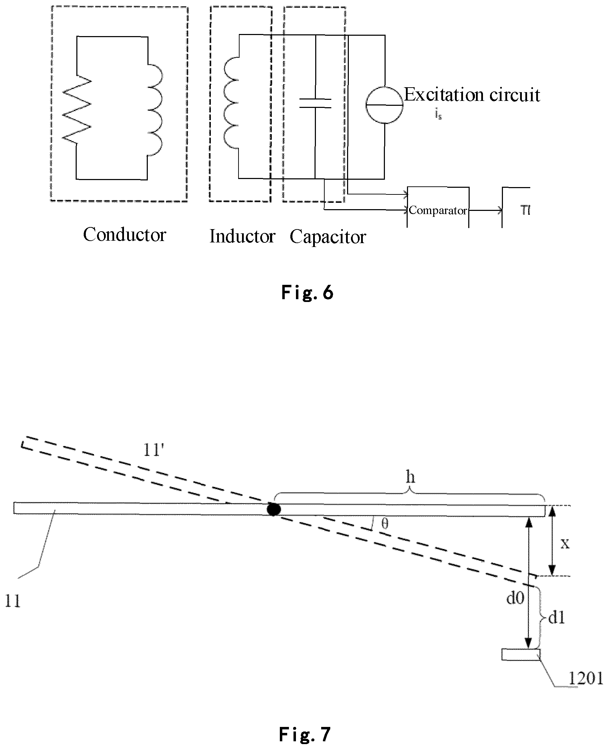

As an optional implementation, the sampling unit 121 includes: a comparator and a time-to-digital converter (TDC). Two signal inputs of the comparator can be connected to the resonant system, and an output of the comparator can be connected to an input of the time-to-digital converter, so as to sample the electrical signal of the resonant system. As shown in FIG. 6, two ends of the parallel-connected inductor and the capacitor are respectively connected to two inputs of the comparator. The output of the comparator can be connected to the time-to-digital converter. The comparator and the time-to-digital converter (TDC) may convert the sine wave into a square wave, and the resonant period or resonant frequency of the resonant system can be determined based on the period of the square wave. The time-to-digital converter (TDC) has higher time resolution, smaller temperature drift, and higher accuracy of measurement results.

Further, the device for measuring the angle of the scanner further includes a processor (not shown), which can be used to determine the resonance frequency of the resonant system based on the output of the sampling unit (when the resonant period is determined, the resonant frequency of the resonant system can be determined based on the relationship between the frequency and the period).

When the resonant frequency is determined, the equivalent inductance $L_e$ corresponding to the resonant frequency can be calculated based no the above formula (1). According to the above analysis, the above-mentioned equivalent inductance $L_e$ is related to the distance between the inductor and the above-mentioned conductor. d is used to represent the distance between the inductor and the conductor, and the equivalent inductance $L_e$ of the LC resonant system satisfies $L_e = f(d)$ ($L_e$ is a function of d).

As an implementation, when d is small, $L_e \approx L0 + k \times d$, where L0 is the equivalent inductance when d=0, and k is the influence coefficient of d.

As an implementation, the relationship between d and $L_e$ can be determined using a calibration method. The corresponding $L_e$ for different d values can be measured to obtain the distance-inductance correspondence between d and $L_e$, such as a d~$L_e$ curve or correspondence table, and the correspondence can be stored in the LiDAR. In practical applications, the equivalent induct-

ance $L_e$ can be determined based on the resonant frequency measured in real time for the resonant system, and the value of the distance d between the inductor and the conductor can be obtained by looking up the correspondence.

In addition, the relationship between d and the resonant frequency (or resonant period) of the resonant system can also be determined using the calibration method. The corresponding resonant frequencies (or resonant periods) for different d values are measured to obtain the correspondence between d and resonant frequency (or resonant period), such as a relationship curve or a correspondence table, and the correspondence can be stored in the LiDAR. In practical applications, the value of the distance d between the inductor 1201 and the conductor 11 can be obtained by looking up the frequency-distance correspondence based on the resonant frequency (or resonant period) measured in real time for the resonant system. Refer to FIG. 7, a schematic diagram of measuring the tilt angle of the scanning mirror applied to the device for measuring the angle of the embodiment shown in FIG. 3A is shown. Since the conductor 11 is fixedly connected to the scanning mirror 10, the tilt angle of the conductor 11 can be equivalent to the tilt angle of the scanning mirror 10 in the schematic principle diagram. As shown in FIG. 7, the initial distance between the conductor 11 in its initial state (static state, as shown by the solid line in FIG. 7) and the inductor 1201 is d0. When the conductor 11 pivots the angle θ with the scanning mirror to the position 11' (as shown by the dashed line in FIG. 7), the distance between the conductor 11' and the inductor 1201 is d1. The tilt distance x of the edge of the scanning mirror 10 in the normal direction of the plane where the coil is located can be calculated. The tilt angle θ of the scanning mirror 10 and the variation x of the distance between the conductor 11 and the inductor 1201 satisfy a tangent trigonometric relationship. The variation x of the distance between the conductor 11 and the inductor 1201 can be regarded as the tilt distance of the edge of the scanning mirror 10. The variation x =d0-d1. Assuming that the distance from the center of the conductor to the edge of the conductor is h, the tilt angle θ of the scanning mirror, h and x satisfie the following tangent trigonometric relationship with:

$$\tan\theta = \frac{x}{h} = \frac{d0 - d1}{h} \tag{2};$$

Therefore,

$$\theta = \arctan\frac{d0 - d1}{h} \tag{3}.$$

The distance d0 between the projection of the geometric center of the inductor on the scanning mirror and the center of the scanning mirror, and the above x can be determined, and then the tilt angle θ of the scanning mirror can be determined based on formula (3).

As an implementation, the correspondence between θ and the above parameter (the resonance frequency or the above-mentioned equivalent inductance), such as the angle-inductance correspondence between θ and the equivalent inductance, or the angle-frequency correspondence between θ and the resonance frequency can be determined using a calibration method and stored in the LiDAR. In practical applications, based solely on the above parameter of the resonant system, the real-time tilt angle of the scanning mirror can be obtained by looking up the correspondence.

In some application scenarios, the above-mentioned correspondence can be a calibration curve. In these application scenarios, the angle measurement circuit can determine the tilt angle using the predetermined calibration curve between the parameter and the tilt angle. That is, in practical applications, based solely on the above parameter of the resonant system the real-time tilt angle of the scanning mirror can be determined based on the calibration curve.

It is to be noted that the device for measuring the angle of this invention is not limited to such an arrangement where the conductor 11 is fixed on a surface of the scanning mirror 10 opposite to the reflective surface as shown in FIG. 3A and FIG. 7, and the conductor 11 can be fixed on any other position of the scanning mirror 10. As an implementation, the conductor 11 can be fixed on the side edge of the scanning mirror 10.

The resonant system is also not limited to such a fixed arrangement where the inductor is arranged at a predetermined distance from the conductor 11 in the normal direction of the scanning mirror 10. As long as the tilt of the scanning mirror 10 can influence the tilt or movement of the conductor 11, thereby changing the equivalent inductance of the resonant system, the parameter of the resonant system can be used to characterize the tilt angle of the scanning mirror. As an implementation, the inductor 1201 may be arranged in the same plane as the static position of the conductor 11. The conductor 11 can be fixed on a surface of the scanning mirror opposite to the reflective surface, and the inductor 1201 can be arranged at a predetermined distance from the conductor 11 on the plane where the conductor 11 is located, that is, the inductor 1201 can be arranged around the scanning mirror 10. As another implementation, the conductor 11 can be fixed on the side edge of the scanning mirror 10, and the inductor 1201 can be arranged at a predetermined distance from the conductor 11 around the scanning mirror 10.

In this embodiment, by arranging the conductor 11 on the scanner, and by providing the angle measurement circuit including a resonant system, the parameter of the above-mentioned resonant system during resonance can be measured to determine the equivalent inductance of the inductor and the above-mentioned conductor based on the parameter, and then the tilt angle of the scanning mirror can be determined based on the equivalent inductance. There is no need to install any component requiring power supply on the scanning mirror in the above-mentioned device for measuring the angle of the scanner. Therefore, there is no need for power supply and heat dissipation for the scanning mirror. Therefore, the above-mentioned device for measuring the angle does not affect the reliability of the scanner. In addition, the above-mentioned device for measuring the angle has a simple and compact structure, which can reduce the cost of measuring the tilt angle of the scanner.

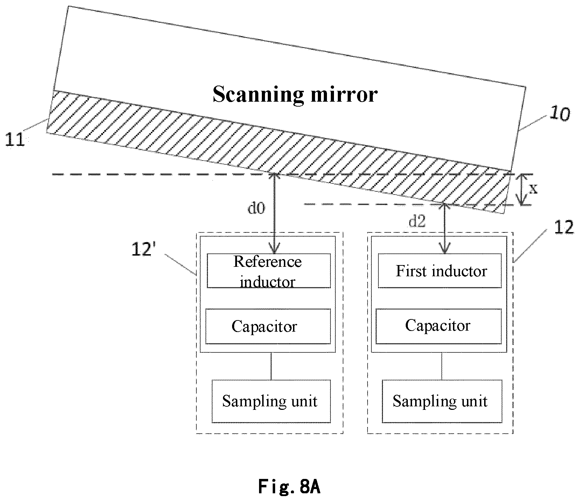

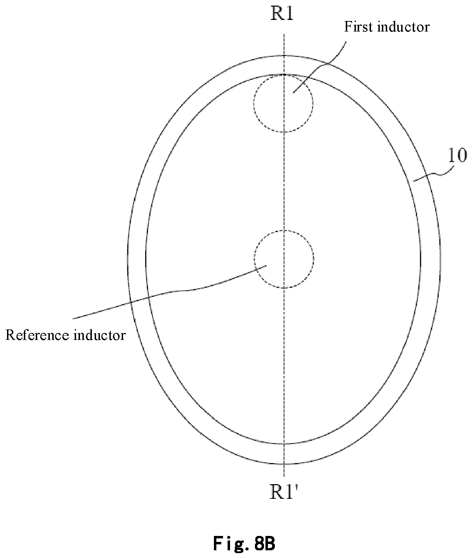

Referring to FIG. 8A and FIG. 8B, schematic structural diagrams illustrating a device for measuring an angle of a scanner according to some other embodiments of this application are shown. FIG. 8B is a schematic top view of a relative position between a scanning mirror and an inductor in FIG. 8A.

In these embodiments, the device for measuring the angle of the scanner includes a plurality of angle measurement circuits.

As shown in FIG. 8A, the plurality of angle measurement circuits include a reference angle measurement circuit 12' and at least one edge angle measurement circuit 12. As shown in FIG. 8B, the projection of the center of the reference inductor of the reference angle measurement circuit 12' on the scanning mirror can substantially overlap with the geometric center of the scanning mirror. Each of the reference angle measurement circuit 12' and the edge angle measurement circuit 12 includes an inductor. For example, the reference angle measurement circuit 12' includes a reference inductor, and the edge angle measurement circuit 12 may include a first inductor.

The projection of the geometric center of the first inductor of the edge angle measurement circuit 12 on the scanning mirror 10 can be offset from the geometric center of the scanning mirror.

The scanning mirror 10 includes at least one axis on which the projection of the geometric center of the first inductor of the edge angle measurement circuit 12 on the scanning mirror 10 can be located. As shown in FIG. 8B, the projection of the geometric center of the first inductor on the scanning mirror 10 can be located on the axis R1-R1'.

The distance d0 between the reference inductor and the conductor 11 measured by the reference angle measurement circuit 12' can be regarded as the reference distance between the inductor and the conductor 11 in a static state. The edge angle measurement circuit 12 can be used to measure the first distance d2 between the first inductor in the edge angle measurement circuit 12 and the conductor 11 when the scanning mirror 10 pivoted. The tilt angle of the scanning mirror 10 can be determined based on the reference distance d0 and the first distance d2. In this embodiment, the parameter can be the equivalent inductance as an example for illustration.

Taking the number of edge angle measurement circuits 12 being 1 as an example, as shown in FIG. 7, the reference angle measurement circuit 12 can be arranged at a position corresponding to a rotation center of the scanning mirror. The reference inductor in the reference angle measurement circuit, the capacitor and the excitation circuit connected in parallel, forming the measurement circuit as shown in FIG. 4, which is used to measure the reference distance d0 based on the parameter of the resonant system and the equivalent inductance $L_{e0}$. The edge angle measurement circuit 12 can be provided at the position where the scanning mirror 10 reaches maximum tilt amplitude (vibration edge). The edge angle measurement circuit 12 includes a first inductor, which can also be connected to a capacitor and an excitation power supply to form an LC resonant system, and can measure d2 when an angle changes based on the equivalent inductance $L_{e1}$. Furthermore, the angle change of the scanning mirror can be determined based on the difference between the two x=d2-d0.

In addition, the correspondence between $L_{e1}-L_{e0}$ and x can also be calibrated, and the difference can be obtained when $L_{e1}$ and $L_{e0}$ are measured, and the value of x can be obtained by looking up the correspondence based on the difference result $L_{e1}-L_{e0}$.

Due to factors such as thermal deformation, the reference distance d0 of the scanning mirror can change, and the distance d2 between the conductor 11 and the first inductor corresponding to the same tilt angle of the scanning mirror 10 can change after thermal deformation. In the example shown in FIG. 8A and FIG. 8B, due to thermal expansion and contraction of the scanning mirror 10, d0 and d2 will change synchronously. Therefore, based on the distance d0 measured by the reference inductor, the distance d2 when pivoted measured by the first inductor, and the angle measurement deviation caused by the variation of d0 and d2 due to thermal deformation can be eliminated by the difference x=d2-d0, and the tilt angle of the scanning mirror can be obtained more accurately.

Due to the arrangement of the reference angle measurement circuit and the edge angle measurement circuit, the tilt distance of the scanning mirror can be measured at different positions, and the tilt angle of the scanning mirror can be determined by combining the tilt distances of the scanning mirror measured by the reference angle measurement circuit and the edge angle measurement circuit, which can improve the accuracy of angle measurement and eliminate the measurement deviation caused by factors such as thermal deformation and translation.

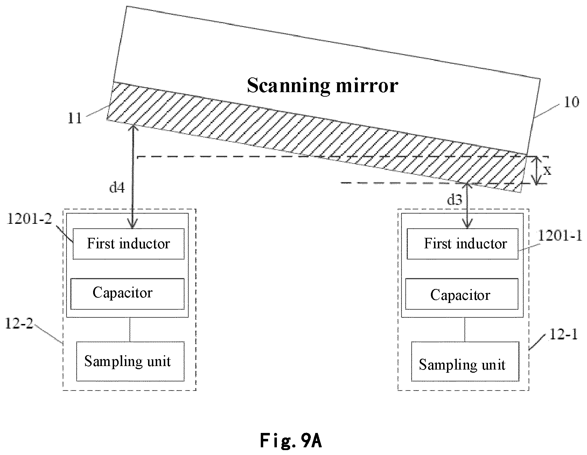

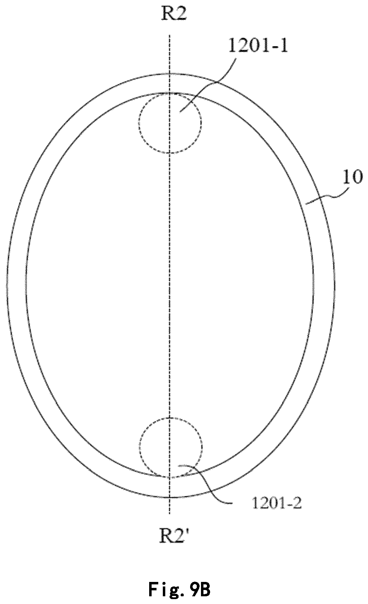

Refer to FIG. 9A and FIG. 9B, FIG. 9A shows a schematic structural diagram illustrating a device for measuring an angle of a scanner according to some other embodiments of this application, and FIG. 9B shows a schematic top view of a relative positional relationship between a scanning mirror and the inductor in the scanner shown in FIG. 9A.

In these embodiments, the device for measuring the angle of the scanner includes a plurality of angle measurement circuits. In this embodiment, the parameter can be the equivalent inductance as an example for illustration.

The plurality of angle measurement circuits include a plurality of edge angle measurement circuits, and the projections of the geometric centers of the inductors of the edge angle measurement circuits on the scanning mirror can be offset from the geometric center of the scanning mirror.

The scanning mirror includes at least one axis, and the projections of the geometric centers of the inductors of at least two edge angle measurement circuits on the scanning mirror are located at two ends of one axis, and are symmetrical about the geometric center of the scanning mirror. As shown in FIG. 9B, the two edge angle measurement circuits correspond to the inductor 1201-1 and the inductor 1201-2 respectively, and the projections of the respective geometric centers of the inductor 1201-1 and the inductor 1201-2 on the scanning mirror 10 are located on the axis R2-R2'.

To obtain the tilt angle around the first axis, the inductors can be arranged in two groups, respectively corresponding to the second axis perpendicular to the first axis, and the second axis is for example the axis R2-R2' as shown in FIG. 9B. The projections of the respective geometric centers of the two inductors 1201-1 and 1201-2 on the scanning mirror are respectively located at two ends of the second axis, and the displacements of positions opposite in motion phase on the mirror surface are respectively measured. As shown in FIG. 9A, the edge angle measurement circuit 12-1 and the edge angle measurement circuit 12-2 are respectively located at the two ends the same axis of the scanning mirror where the scanning mirror reaches its maximum tilt angle, and are symmetrical about the geometric center of the scanning mirror.

The edge angle measurement circuit 12-1 may include a first inductor, and the edge angle measurement circuit 12-2 may include a second inductor. The equivalent inductance of the edge angle measurement circuit 12-1 is denoated as Le2, and the equivalent inductance of the edge angle measurement circuit 12-2 is denoated as Le3. The distance between the first inductor in the edge angle measurement circuit 12-1 and the conductor 11 is denoated as d3. The distance between the second inductor in the edge angle measurement circuit 12-2 and the conductor 11 is denoated as d4.

As an implementation, the correspondence between $L_{e3}$-$L_{e2}$ and d4-d3 can be calibrated. The equivalent inductance $L_{e2}$ between the inductor of the edge angle measurement circuit 12-1 and the conductor 11 and the equivalent inductance $L_{e3}$ between the inductor of the edge angle measurement circuit 12-2 and the conductor 11 can be measured using the method according to the embodiment as shown in FIG. 3, and the difference between the two $L_{e3}$-$L_{e2}$ is calculated. Then, the corresponding x=d1-d2 can be determined based on the correspondence.

Using different groups of edge angle measurement circuits, the tilt distance of the scanning mirror can be measured at different positions, and the tilt angle of the scanning mirror can be determined by combining the tilt distances of the scanning mirror measured by the reference angle measurement circuit and the edge angle measurement circuit, which can improve angle measurement accuracy, and eliminate measurement deviation caused by thermal deformation, translational movement and other factors.

If there are more than two groups of edge angle measurement circuits, multiple groups of edge angle measurement circuits can be arranged corresponding to the above-mentioned second axis respectively. The projections of the geometric centers of the inductors of the multiple groups of edge angle measurement circuits on the scanning mirror are located on the second axis respectively. Multiple tilt distances can be measured using the multiple groups of edge angle measurement circuits, and multiple tilt angles can be calibrated respectively. The final tilt angle of the scanning mirror can be determined based on the multiple tilt angles combined with the positions of the inductors. For example, where the projections of the geometric centers of the inductors of the two groups of edge angle measurement circuits on the scanning mirror are located on the same side of the second axis relative to the geometric center of the scanning mirror, the tilt angles measured by the two groups of edge angle measurement circuits can be averaged. If the projections of the geometric centers of the inductors of the two groups of edge angle measurement circuits on the scanning mirror are located at two ends of the second axis relative to the geometric center of the scanning mirror, the difference between tilt angles measured by the two groups of edge angle measurement circuits can be determined to calculate the final tilt angle of the scanning mirror.

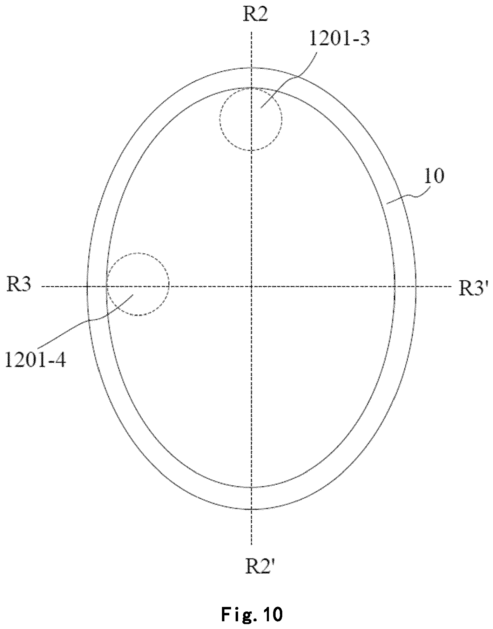

Refer to FIG. 10, a schematic diagram illustrating a relative position relationship between an inductor and the scanning mirror in the device for measuring the angle of the scanner according to some other embodiments of this application is shown.

The device for measuring the angle may include a plurality of angle measurement circuits. The projections of the geometric centers corresponding to the inductors of the angle measurement circuits on the scanning mirror 10 can be offset from the geometric center of the scanning mirror 10. That is, the plurality of angle measurement circuits described above include a plurality of edge angle measurement circuits. The projections of the respective corresponding inductors of at least two angle measurement circuits on the scanning mirror 10 are respectively located on different axes of the scanning mirror 10.

As shown in FIG. 10, the projection of the geometric center of the first inductor 1201-3 of an edge angle measurement circuit on the scanning mirror is located on the axis R2-R2' of the scanning mirror. The projection of the geometric center of the first inductor 1201-4 of an edge angle measurement circuit on the scanning mirror is located on the axis R3-R3' of the scanning mirror. The axis R2-R2' and the axis R3-R3' are respectively perpendicular to the first axis.

According to the scheme for measuring the angle using the the device for measuring the angle of the scanner provided in the embodiment as shown in FIG. 3A, the tilt angle of the axis R2-R2' of the scanning mirror around the first axis can be measured using the edge angle measurement circuit where the first inductor 1201-3 is included, and the tilt angle of the axis R3-R3' of the scanning mirror around the first axis can be measured using the edge angle measurement circuit where the first inductor 1201-4 is included.

In FIG. 10, by arranging the edge angle measurement circuits on the two axes, the tilt angle measurement in the two axial directions of the scanning mirror can be achieved.

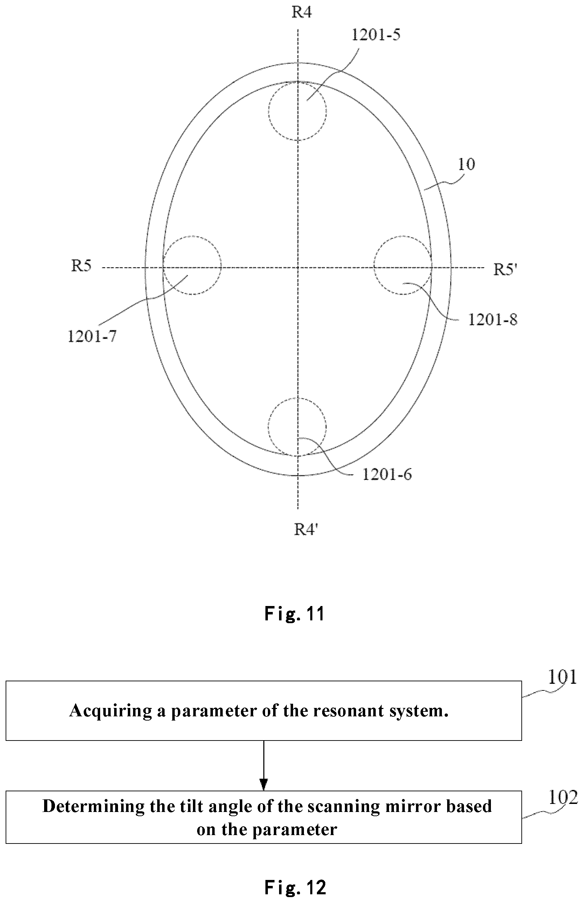

Referring to FIG. 11, a schematic diagram illustrating a relative positional relationship between an inductor and the scanning mirror in the device for measuring the angle of the scanner according to some other embodiments of this application is shown.

In these embodiments, the device for measuring the angle of the scanner includes a plurality of angle measurement circuits.

A two-dimensional scanning mirror includes two mutually perpendicular tilt axes: axis R4-R4' and axis R5-R5'. Axis R4-R4' and axis R5-R5' are respectively perpendicular to the first axis. The projections of the geometric centers of the inductors of the at least two edge angle measurement circuits on the scanning mirror are located at two ends of one of the axes and are symmetrical about the geometric center of the scanning mirror.

As shown in FIG. 11, the edge angle measurement circuits can be sequentially arranged at the edge positions on two axes of the scanning mirror.

The edge angle measurement circuits where the first inductors 1201-5 and 1201-6 are included respectively can be used to measure the tilt angle of the axis R4-R4' of the scanning mirror around the first axis. The edge angle measurement circuits where the first inductors 1207 and 1208 are included respectively can be used to measure the tilt angle of the axis R5-R5' of the scanning mirror around the first axis. The scheme for measuring the tilt angle illustrated in the example as shown in FIG. 9A and FIG. 9B can be refered to during the measurement. The tilt angle measurement results with high accuracy in the two axial directions of the scanning mirror can be achieved.

In some optional implementations, in the devices for measuring the angle of the scanners of the LiDARs in the embodiments of FIG. 8A and FIG. 8B, FIG. 9A and FIG. 9B, FIG. 10 and FIG. 11, each angle measurement circuit includes a resonant system and an excitation source. By controlling the excitation sources of the angle measurement circuits respectively, the resonant systems of the angle measurement circuits can operate at their respective specific resonant frequencies. The resonant frequencies of the resonant systems of at least two angle measurement circuits are different. In some application scenarios, the resonant frequencies of the resonant systems corresponding to the multiple angle measurement circuits respectively may be different.

In these optional implementations, by ensuring that the resonance frequencies of the resonant systems of at least two angle measurement circuits are different, the mutual interference between the resonant systems can be reduced, and the accuracy of the measurement results of each angle measurement circuit can be improved.

In some other optional implementations, each angle measurement circuit respectively includes a resonant system and an excitation source, and the excitation sources of the angle measurement circuits can be respectively controlled to make the resonant systems operate at specific resonant frequencies. The operating sequences of the resonant systems of at least two angle measurement circuits are different.

Specifically, a respective operating sequence can be set for each angle measurement circuit. The operating sequences of the resonant systems of at least two angle measurement circuits may be different. In each operating sequence, the angle measurement circuit corresponding to the operating sequence can bein operating, and can be driven by the excitation circuit to make the resonant system corresponding to the operating sequence be in the resonant state. The excitation current of the angle measurement circuit can be cut off when the sequenc ends. Therefore, the interference between the resonant systems of the respective angle measurement circuits can be avoided, so as to ensure the accuracy of the tilt angle measurement.

In these optional implementations, in order to improve the efficiency of tilt angle measurement, different resonant frequencies can be set for different angle measurement circuits, so that multiple resonant systems with less interference can simultaneously be in a resonant state within the same operating sequence. That is, in the same operating sequence, the angle measurement circuits respective corresponding to at least two resonant systems with less mutual interference can be simultaneously in operation, and the resonant systems of these angle measurement circuits can be driven into resonant states by the excitation circuits to measure the tilt angle of the scanning mirror.

This application also provides a LiDAR, including: an transmitter for emitting a detection beam; a scanner, including a scanning mirror for deflecting the detection beam to a target space and reflecting an echo beam of the detection beam reflected by a object, where the scanning mirror can pivot around at least one axis; a receiver that receives the echo beam and converts the echo beam into an electrical signal; and the devices for measuring the angle of the scanners as shown in one of FIG. 3A-FIG. 3B, FIG. 8A-FIG. 8B, FIG. 9A-9B, FIG. 10 and FIG. 11, configured to determine a tilt angle of the scanning mirror.

Refer to FIG. 12, which shows a schematic flowchart of a method for measuring an angle according to this disclosure, the method for measuring the angle is applied to the device for measuring the angle of the scanner as shown in one of FIG. 3A-FIG. 3B, FIG. 8A-FIG. 8B, FIG. 9A-9B, FIG. 10 and FIG. 11.

As shown in FIG. 12, the above-mentioned method for measuring the angle includes:
Step 101, acquiring a parameter of the resonant system.

When the scanner is in operation, the parameter of the resonant system output by the angle measurement circuit of the scanner can be obtained, where the angle measurement circuit includes the resonant system.

Step 102, determining a tilt angle of the scanning mirror based on the parameter.

In this embodiment, the scanner may include a scanning mirror. At least one side of the scanning mirror includes a reflective surface. The device for measuring the angle of the scanner may include a conductor and an angle measurement circuit. The angle measurement circuit includes a resonant system. The above-mentioned conductor can be installed on a mounting surface of the scanning mirror, and affect the resonance characteristic of the resonant system.

When the scanner is in operation, the scanning mirror can pivot. The conductor installed on the scanning mirror can also pivot with the scanning mirror. The parameter of the resonant system varies with the tilt of the scanning mirror and conductor.

The tilt angle of the scanning mirror can be determined based on the parameter of the resonant system.

Specifically, the resonant system may include an inductor and a capacitor. The inductor can be fixedly arranged at a predetermined distance from a stationary position of the conductor.

The inductor and the conductor can generate mutual inductance, and the equivalent inductance can be determined by the inductor and the mutual inductance. The mutual inductance can be related to the distance between the inductor and the conductor. In this way, the equivalent inductance can be modulated by the distance between the inductor and the conductor.

Before the above-mentioned step 101, the method for measuring the angle of the scanner further includes: utilizing an excitation source to make the resonant system operate in a resonant state.

The above-mentioned resonant system can operate in a resonant state under the action of an excitation signal. When the resonant system resonates, the resonant frequency, capacitance and equivalent inductance satisfy the relationship of the above-mentioned formula (1). Therefore, the above-mentioned equivalent inductance can be determined based on the measured resonance frequency.

In some optional implementations, the above-mentioned step 102 includes the following steps: determining the current distance between the inductor and the conductor based on a predetermined distance-parameter correspondence, where the distance-parameter correspondence can reflect the correspondence between the distance between the inductor and the conductor and the parameter of the resonant system; and determining the tilt angle of the scanning mirror based on the distance.

A calibration curve between the tilt angle of the scanning mirror and the parameter of the resonant system can be determined in advance by means of calibration. When the angle measurement circuit outputs the parameter of the resonant system, the tilt angle of the scanning mirror can be determined based on the above-mentioned calibration curve.

In this embodiment, the angle measurement circuit further includes a sampling unit, and the above-mentioned step 101 further includes: sampling an electrical signal output by the resonant system and outputting the sampled electrical signal to determine the parameter. The above-mentioned parameter includes the equivalent inductance, the resonant frequency or the resonant period of the resonant system. The resonance frequency can be determined based on the resonant period.

In addition, the above-mentioned angle measurement circuit further includes a processor. The processor can receive the output of the sampling unit, and determine the variation period of the electrical signal as the resonant period of the resonant system.

In some optional implementations, the angle measurement circuit includes a reference angle measurement circuit and at least one edge angle measurement circuit. Each of the reference angle measurement circuit and the edge angle measurement circuit includes an inductor, and the projection of the geometric center of the reference inductor of the reference angle measurement circuit on the scanning mirror can substantially overlap with the geometric center of the scanning mirror. The projection of the geometric center of the first inductor of the edge angle measurement circuit on the scanning mirror can be offset from the geometric center of the scanning mirror. The above-mentioned step 102 includes following substeps:

Substep 1021, based on the reference equivalent inductance output by the reference angle measurement circuit, determining the reference distance between the reference inductor and the geometric center of the scanning mirror; and
Substep 1022, based on the measured equivalent inductance output by the edge angle measurement circuit, determining the first distance between the first inductor and the geometric center of the scanning mirror.

Further, the above step 102 includes: determining the tilt angle of the scanning mirror based on the reference distance and the first distance.

In some application scenarios, the above-mentioned angle measurement circuit includes: the projection of the geometric center of the first inductor of at least one edge angle measurement circuit on the scanning mirror can locate on the axis of the scanning mirror, and the tilt angle of the scanning mirror on the axis can be determined based on the reference distance and the first distance.

In some optional implementations, the angle measurement circuit includes a plurality of edge angle measurement circuits, the projection of the geometric center of the first inductor of the edge angle measurement circuit on the scanning mirror can be offset from the geometric center of the scanning mirror, and the step 102 further includes:

measuring respectively the first distances between respective inductors and the conductor using the plurality of edge angle measurement circuits and determining the tilt angle of the scanning mirror based on the plurality of first distances.

In some optional implementations, the projections of the geometric centers of the inductors of at least two edge angle measurement circuits on the scanning mirror are symmetrical with respect to the geometric center of the scanning mirror.

The measuring respectively the first distances between respective inductors and conductor using the plurality of edge angle measurement circuits and determining the tilt angle of the scanning mirror based on the plurality of first distances includes:

determing the tilt angle of the scanning mirror based on the first distances between the respective inductors of the at least two edge angle measurement circuits and the conductor.

The foregoing descriptions are merely the preferred embodiments of this application and descriptions of technical principles used. A person of ordinary skill in the art should understand that the invention scope related to this application is not limited to the technical solutions formed by the specific combinations of the above-mentioned technical features, and further includes other technical solutions formed by any combination of the above-mentioned technical solution or equivalent features without departing from the inventive concept. For example, technical solutions formed by replacing the above-mentioned features with technical features and having similar functions disclosed in this application (but not limited to) are also included.

## Claims

1. A device for measuring an angle of a scanner of a LiDAR, comprising: a conductor and an angle measurement circuit, wherein

the scanner comprises a scanning mirror, at least one side of the scanning mirror comprising a reflective surface, and the scanning mirror is configured to pivot around at least one axis to change a direction of an emittedbeam from the LiDAR or a reflected beam,
the conductor is configured to be fixed on the scanning mirror,
the angle measurement circuit comprises a resonant system and a sampling unit,
the conductor is configured to affect a resonance characteristic of the resonant system, and
the sampling unit is configured to sample an electrical signal of the resonant system and output the electrical signal to determine a parameter of the resonant system to determine a tilt angle of the scanning mirror.

2. The device of claim 1, wherein the parameter comprises a resonant frequency or a resonant period of the resonant system, and the device for measuring the angle is configured to determine the tilt angle of the scanning mirror based on the resonant frequency or the resonant period.

3. The of claim 1, wherein the parameter comprises an equivalent inductance of the resonant system, and the device for measuring the angle is configured to determine the tilt angle of the scanning mirror based on the equivalent inductance.

4. The of claim 2, wherein the resonant system comprises an inductor and a capacitor, and the inductor is configured to be fixedly arranged at a predetermined distance from a stationary position of the conductor.

5. The device of claim 4, wherein a projection of a geometric center of the inductor on the scanning mirror is configured to be offset from a geometric center of the scanning mirror.

6. The device of claim 2, wherein the device for measuring the angle of the scanner of the LiDAR is configured to determine a tilt distance of an edge of the scanning mirror based on the parameter, and is further configured to determine the tilt angle based on the tilt distance.

7. The device of claim 1, wherein the device for measuring the angle of the scanner comprises a plurality of angle measurement circuits.

8. The device of claim 7, wherein the plurality of angle measurement circuits comprise a reference angle measurement circuit and at least one edge angle measurement circuit; and each of the reference angle measurement circuit and the edge angle measurement circuit comprises an inductor;

a projection of a geometric center of the inductor of the reference angle measurement circuit on the scanning mirror is configured to be substantially overlapping with a geometric center of the scanning mirror; and

a projection of a geometric center of the inductor of the edge angle measurement circuit on the scanning mirror is configured to be offset from a geometric center of the scanning mirror.

9. The device of claim 8, wherein the scanning mirror comprises at least one axis, and the projection of the geometric center of the inductor of the edge angle measurement circuit on the scanning mirror is configured to be on the axis.

10. The device of claim 7, wherein the angle measurement circuit comprises a plurality of edge angle measurement circuits, and projections of geometric centers of inductors of the edge angle measurement circuits on the scanning mirror are configured to be offset from a geometric center of the scanning mirror.

11. The device of claim 10, wherein the scanning mirror comprises at least one axis, and projections of geometric centers of inductors of at least two edge angle measurement circuits on the scanning mirror are configured to be at two ends of an axis and be symmetrical with respect to the geometric center of the scanning mirror.

12. The device of claim 1, wherein the angle measurement circuit is configured to determine the tilt angle based on a predetermined calibration curve of the parameter and the tilt angle.

13. The device of claim 1, wherein the device for measuring the angle of the scanner further comprises a processor, and the processor is configured to determine the parameter of the resonant system based on an output of the sampling unit.

14. The device of claim 13, wherein the processor is further configured to determine a variation period of the electrical signal as a resonant period of the resonant system.

15. The device of claims 7, wherein at least one of resonant frequencies or operation sequences of resonant systems of at least two angle measurement circuits are different.

16. A LiDAR, comprising:

an transmitter configured to emit a detection beam;

a scanner comprising a scanning mirror configured to deflect the detection beam to a target space and reflect an echo beam of the detection beam reflected by an object, and the scanning mirror is configured to pivot around at least one axis;

a receiver configured to receive the echo beam and convert the echo beam into an electrical signal; and

the device for measuring the angle of the scanner of the LiDAR as claimed in any one of claims 1 to 15, configured to determine a tilt angle of the scanning mirror.

17. A method for measuring a tilt angle of a scanner of a LiDAR using the device for measuring the angle as claimed in any one of claims 1 to 15, wherein the scanner comprises a scanning mirror, a conductor is configured to be fixed on the scanning mirror, the angle measurement circuit comprises a resonant system, and the method comprising:

acquiring a parameter of the resonant system; and

determining a tilt angle of the scanning mirror based on the parameter.

Fig. 1

Driving beam

Piezoelectric /
piezoresistive
element

Measuring
circuit

Fig. 2

Fig. 3A

Fig. 3B

Lm

Conductor   Inductor   Capacitor

Excitation circuit
$i_s$

**F i g. 4**

Conductor   Inductor   Capacitor

Excitation circuit
$i_s$

ADC

**F i g. 5**

Conductor    Inductor    Capacitor

**Fig. 6**

**Fig. 7**

**Fig. 8A**

Fig. 8B

Fig. 9A

Fig. 9B

Fig. 10

R4

1201-5

10

R5 --------- R5'

1201-7

1201-8

1201-6

R4'

**Fig. 11**

| | |
|---|---|
| Acquiring a parameter of the resonant system. | 101 |

| | |
|---|---|
| Determining the tilt angle of the scanning mirror based on the parameter | 102 |

**Fig. 12**

## INTERNATIONAL SEARCH REPORT

| International application No. |
| --- |
| **PCT/CN2021/143790** |

**A. CLASSIFICATION OF SUBJECT MATTER**

G01S 7/481(2006.01)i; G01D 5/20(2006.01)i

According to International Patent Classification (IPC) or to both national classification and IPC

**B. FIELDS SEARCHED**

Minimum documentation searched (classification system followed by classification symbols)

G01S, G01D

Documentation searched other than minimum documentation to the extent that such documents are included in the fields searched

Electronic data base consulted during the international search (name of data base and, where practicable, search terms used)

CNPAT; CNKI; WPI; EPODOC: 禾赛, 角度, 角位移, 角位置, 转角, 转动, 摆动, 偏转, 旋转, 轴, 测量, 确定, 量测, 导体, 金属, 谐振, 电感, 电容, 距离, 激光, 雷达, lidar, angle, angular, rotat+, deflect+, axis, measur+, determin+, detect+, conductor, metal, resonan+, inductance, inductor, capacitance, capacitor, distance, laser, radar

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111308443 A (LEISHEN INTELLIGENT SYSTEM CO., LTD.) 19 June 2020 (2020-06-19) description, paragraphs [0038]-[0042], and figure 1 | 1-17 |
| Y | US 2002144547 A1 (PCHELNIKOV, Y. N. et al.) 10 October 2002 (2002-10-10) description, paragraphs [0051]-[0097], and figures 1-6 and 16-18 | 1-17 |
| Y | CN 103906994 A (CONTINENTAL TEVES AG & CO., OHG.) 02 July 2014 (2014-07-02) description, paragraphs [0007]-[0038], and figures 1-5 | 6 |
| A | WO 2019149669 A1 (THYSSENKRUPP PRESTA AG. et al.) 08 August 2019 (2019-08-08) entire document | 1-17 |
| A | DE 102004033083 A1 (ROBERT BOSCH G.M.B.H.) 26 January 2006 (2006-01-26) entire document | 1-17 |
| A | US 2008054911 A1 (PCHELNIKOV, Y. N. et al.) 06 March 2008 (2008-03-06) entire document | 1-17 |
| A | US 2021010793 A1 (HELLA GMBH. & CO. KGAA.) 14 January 2021 (2021-01-14) entire document | 1-17 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 March 2022** | **29 March 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/143790**

| Patent document cited in search report | | | Publication date (day/month/year) | Patent family member(s) | | | Publication date (day/month/year) |
|---|---|---|---|---|---|---|---|
| CN | 111308443 | A | 19 June 2020 | None | | | |
| US | 2002144547 | A1 | 10 October 2002 | None | | | |
| CN | 103906994 | A | 02 July 2014 | WO | 2013064646 | A1 | 10 May 2013 |
| | | | | DE | 102011085737 | A1 | 08 May 2013 |
| | | | | KR | 20140097296 | A | 06 August 2014 |
| | | | | EP | 2773923 | A1 | 10 September 2014 |
| | | | | EP | 2773923 | B1 | 30 March 2016 |
| | | | | US | 2014288796 | A1 | 25 September 2014 |
| | | | | US | 9541372 | B2 | 10 January 2017 |
| | | | | CN | 103906994 | B | 13 June 2017 |
| WO | 2019149669 | A1 | 08 August 2019 | DE | 102018102094 | A1 | 01 August 2019 |
| | | | | EP | 3746746 | A1 | 09 December 2020 |
| DE | 102004033083 | A1 | 26 January 2006 | None | | | |
| US | 2008054911 | A1 | 06 March 2008 | US | 7583090 | B2 | 01 September 2009 |
| US | 2021010793 | A1 | 14 January 2021 | WO | 2019185338 | A1 | 03 October 2019 |
| | | | | CN | 112005083 | A | 27 November 2020 |
| | | | | DE | 102018107416 | A1 | 02 October 2019 |
| | | | | EP | 3775785 | A1 | 17 February 2021 |
| | | | | EP | 3775785 | B1 | 23 February 2022 |
| | | | | EP | 3775786 | A1 | 17 February 2021 |
| | | | | CN | 111886478 | A | 03 November 2020 |
| | | | | US | 2021010881 | A1 | 14 January 2021 |
| | | | | WO | 2019185336 | A1 | 03 October 2019 |

Form PCT/ISA/210 (patent family annex) (January 2015)

**REFERENCES CITED IN THE DESCRIPTION**

**Patent documents cited in the description**

• CN 202110442203